Europäisches Patentamt

European Patent Office

Office européen des brevets

(19)

(11) Publication number: **0 374 987**

**A1**

## EUROPEAN PATENT APPLICATION

(21) Application number: **89202859.8**

(22) Date of filing: **10.11.89**

(51) Int. Cl.5: **G01S 7/28**

(30) Priority: **21.11.88 NL 8802863**

(43) Date of publication of application:
**27.06.90 Bulletin 90/26**

(84) Designated Contracting States:
**AT BE CH DE ES FR GB GR IT LI NL SE**

(71) Applicant: **HOLLANDSE SIGNAALAPPARATEN B.V.**
**Zuidelijke Havenweg 40 P.O. Box 42**
**NL-7550 GD Hengelo(NL)**

(72) Inventor: **Gellekink, Bernard**
**Winhofflaan 3**
**NL-7631 HX Ootmarsum(NL)**

(54) Radar apparatus and side-lobe suppression unit suitable for application in such a radar apparatus.

(57) The invention relates to a radar apparatus provided with a main directional antenna (1), a first coherent receiver (2) connected to the directional antenna for obtaining first receiving signals, an MTI unit connected to said receiver, and a coherent side-lobe suppression unit (3). This unit (3) is provided with an auxiliary antenna (4), a second receiver (5) connected to the auxiliary antenna (4) for obtaining second receiving signals, and a signal weighting and combination unit (6) connected to the second receiver (5). This unit (6), supplied with the first and second signals, generates an output signal to be supplied to the MTI unit and comprising such a combination of the first and second receiving signals that interference signals received via the side lobes of the main directional antenna and present in the first signals are suppressed in the output signal.

The auxiliary antenna (4) has a minimum in sensitivity at least in the direction coinciding with a direction in which the main directional antenna (1) has a maximum in sensitivity. In this way an attenuation of the signals received by the auxiliary antenna in this direction is achieved while maintaining phase correlation.

This solves the problem of degraded performance of the MTI unit because less decorrelated clutter signals received by the auxiliary antenna are being injected into the output signal.

Fig.1

The invention relates to a radar apparatus provided with:
- a main directional antenna,
- a first coherent receiver connected to the directional antenna for obtaining first receiving signals;
- an MTI unit connected to said receiver;
- a coherent side-lobe suppression unit provided with:
- an auxiliary antenna;
- a second receiver connected to the auxiliary antenna for obtaining second receiving signals;
- a signal weighting and combination unit connected to the second receiver, which unit, supplied with the first and second signals, generates an output signal to be supplied to the MTI unit and comprising such a combination of the first and second receiving signals that interference signals received via the side lobes of the main directional antenna and present in the first signals are suppressed in the output signal.

The invention also relates to a side-lobe suppression unit suitable for application in such a radar apparatus.

A radar apparatus including a side-lobe suppression unit as described above is known from the European Patent EP-B 0.076.536. This patent describes a side-lobe suppression unit incorporated with a radar apparatus, which unit is provided with a practically omnidirectional auxiliary antenna (omni-antenna). By subtracting the signals received via this auxiliary antenna from the signals received via a main directional antenna, the signals received via the side lobes of this main antenna are suppressed.

Such a device is particularly suitable for the suppression of interference signals from active noise sources, such as jammers, received via the side lobes of the main antenna.

However, when such a device is applied in an environment with many extensive and strongly reflecting clutter areas, such as a sea environment, the side-lobe suppression unit has proven to affect the operation of the MTI unit. This is caused by the tendency of the side-lobe suppression unit to suppress, in the absence of interference signals, the clutter returns from the clutter areas. However, this will not succeed due to the inconsistent character of the clutter returns. As a result, the side-lobe suppression unit, by vainly suppressing the clutter returns, will supply the first receiver with an uncorrelated clutter signal which is then impossible for the coherent MTI unit to adequately suppress due to decreased coherence. This implies that a system having a high MTI performance is degraded to a system having a mediocre MTI performance. It is in this situation not really feasible to switch off the side-lobe suppression unit because practical experience has taught that high-interference and low-interference conditions alternate too quickly during a radar revolution.

It is an object of the present invention to provide a radar apparatus incorporating a side-lobe suppression unit where the above disadvantages are largely obviated. The invention is characterised in that the auxiliary antenna has a minimum in sensitivity at least in the direction coinciding with a direction in which the main directional antenna has a maximum in sensitivity to achieve an attenuation of the signals received by the auxiliary antenna in this direction, while maintaining phase correlation.

This measure will ensure that the clutter share of the signal from the auxiliary antenna is decreased without causing decorrelation of the clutter signal and without affecting the fundamental operation of the side-lobe suppression unit. After all, the auxiliary antenna only needs to be sensitive in the direction of the main antenna side lobes. This measure is relatively cost-effective as compared to an alternative such as the incorporation of expensive MTI-processing equipment into the second receiver to filter the clutter out of the second signal.

It should be noted that US patent US-A 3,916,408 describes a radar system having a coherent side-lobe suppression unit of which the antenna pattern of the auxiliary antenna connected to this unit has a difference pattern around the main direction of the main antenna resulting from a difference network. This however solves another problem. A large signal received in the main lobe of the main antenna proves to derange the side-lobe suppression unit to such an extent that the interference signals received via the side lobes are less effectively suppressed. By creating a difference pattern in the auxiliary antenna, resulting in a phase reversal on opposite sides of the axis of the main lobe, the signal received via the auxiliary antenna will be strongly decorrelated with respect to the signal received via the main lobe of the main antenna. This results in a decreased mutual correlation between the signals received via the main lobe of the main antenna and those via the auxiliary antenna, causing the side-lobe suppression unit to be less deranged.

This measure would however only increase our problem of a degraded MTI operation on account of the extra decorrelation. When an MTI unit is present, extra decorrelation is particularly undesirable. The present invention is based on the as yet unformulated understanding that extra decorrelation must not occur when the clutter contribution is attenuated.

An embodiment is characterised in that the auxiliary antenna is rigidly connected to the main antenna. Thus the direction of the sensitivity "dip" of the auxiliary antenna is always ensured to coincide with the

2

direction into which the main antenna has maximum sensitivity.

Finally it remains to be stated that a realisation of an auxiliary antenna having an antenna pattern according to the invention is in fact a matter of applying already known microwave antenna techniques. An example of such an antenna, be it in a totally different application (satellite communication) is set forth in European Patent EP-A 0.251.818.

The invention will now be described with reference to the accompanying figures, of which

Fig. 1 is a schematic diagram of a radar apparatus including a side-lobe suppression unit;

Fig. 2 shows the degree of interference suppression by the side-lobe suppression unit as a function of the amount of clutter;

Fig. 3 shows an antenna pattern of the main antenna and a conventional auxiliary antenna; and

Fig. 4 shows an antenna pattern of the main antenna and the auxiliary antenna according to the invention.

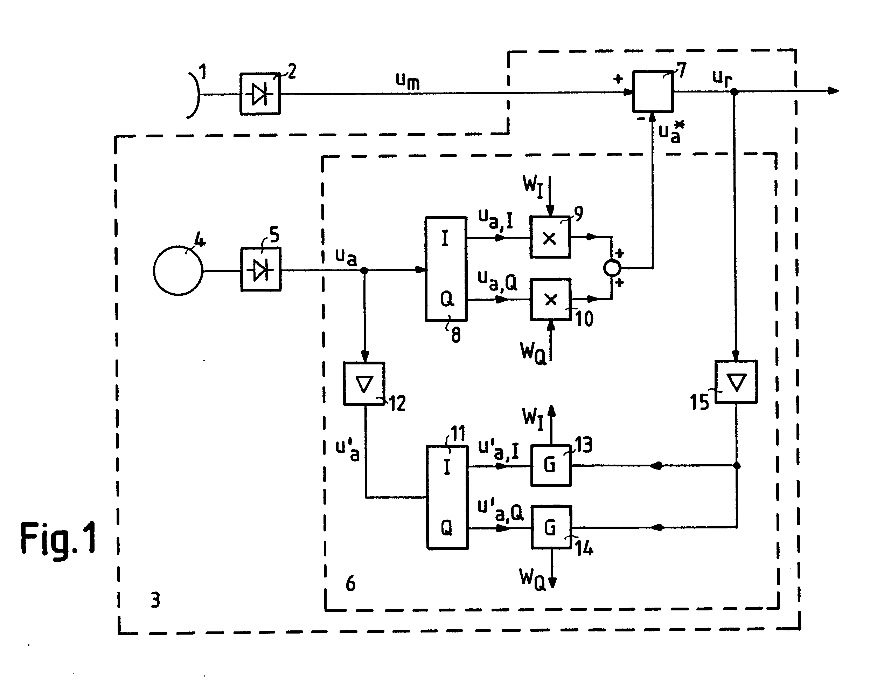

Fig. 1 is a schematic representation of a radar apparatus provided with a main directional antenna 1, a first receiver 2, and a side-lobe suppression unit 3. The high-frequency radar signals received by main antenna 1 are amplified and transformed by receiver 2 to intermediate-frequency signals $u_m$.

In the embodiment set forth, the side-lobe suppression unit 3 uses intermediate-frequency signals. The invention can however also be applied using a side-lobe suppression unit operational in the high-frequency area.

The side-lobe suppression unit is provided with an auxiliary antenna 4, a second receiver 5, a signal processing unit 6 and a combination unit 7. The high-frequency signals received by auxiliary antenna 4 are amplified by second receiver 5 and transformed to intermediate-frequency signals $u_a$, which are subsequently supplied to signal weighting unit 6. On the basis thereof, the signal weighting unit supplies a weighted signal $u_a^*$ to combination unit 7. This unit subtracts this signal from signal $u_m$, which has also been supplied to combination unit 7. The resulting signal

$$u_r = u_m - u_a^* \qquad (1)$$

are fed back to signal weighting unit 6 to enable iterative determination in a closed loop of such a value of $u_a^*$ that the interference signal commonly present in $u_a$ and $u_m$ can be maximally suppressed in $u_m$. The resulting signal $u_r$ is applied to an MTI unit not shown in the figure.

The value of $u_a^*$ is determined by successively multiplying the in-phase and quadrature (90° out-of-phase) components $u_{a,I}$ and $u_{a,Q}$ of $u_a$ with weighting factors $W_I$ and $W_Q$ respectively in accordance with:

$$u_a^* = W_I.u_{a,I} + W_Q.u_{a,Q} \qquad (2)$$

As a result, the weighted signal $u_a^*$ can be provided with a proper amplitude as well as a proper phase. This specific case is a matter of so-called quadrature side-lobe suppression. However, the invention is not limited to this type of side-lobe suppression. $u_{a,I}$ and $u_{a,Q}$ are determined by means of a quadrature detector 8 connected to second receiver 5. $u_{a,I}$ is supplied to a multiplication unit 9 and $u_{a,Q}$ is supplied to a multiplication unit 10. These units multiply the supplied signals $u_{a,I}$ and $u_{a,Q}$ with weighting factors $W_I$ and $W_Q$ which are also supplied.

The side of the weighting factors $W_I$ and $W_Q$ is determined by correlating the resulting signal $u_r$ with in-phase and quadrature components $u'_{a,I}$ and $u'_{a,Q}$, respectively, of $u_a$. For this purpose, a second quadrature detector 11 is connected to second receiver 5 via a first amplifier 12. The resulting signals $u'_{a,I}$ and $u'_{a,Q}$ are respectively supplied to correlation units 13 and 14. Moreover, via a second amplifier 15, the resulting signal $u_r$ is supplied to these correlation units. These units 13 and 14 respectively generate the weighting factors $W_I$ and $W_Q$ which indicate the degree of correlation of $u'_{a,I}$ and $u'_{a,Q}$ with $u_r$. These correlation units are for that purpose provided with multiplication circuits and filters which are not indicated in the figure. The correlation units therefore determine the common components in signals $u_m$ and $u_a$.

Mathematically $u_m$ can be expressed as follows:

$$u_m = j_m \, s(t) \cos(\omega t + \gamma) + C_m \, c(t) \cos(\omega t + \theta) + N_m(t), \qquad (3)$$

where the interference signal from a jammer j is represented by a harmonic with an intermediate frequency $\omega$, a phase shift $\gamma$ and a time-dependent complex amplitude $j_m \, s(t)$. The constant $j_m$ is determined amongst other things by the antenna sensitivity of main antenna 1 and the amplification of the receiver 2 connected thereto. The time dependency is indicated by the normalised and complex time function $s(t)$. The clutter signal is represented in an identical manner by $C_m \, c(t) \cos(\omega t + \theta)$. The noise in the channel connected to the main antenna is represented by $N_m(t)$. For simplicity's sake, it is assumed in this description that the clutter and interference signals have the same doppler frequency. In practice, the clutter in the main channel is suppressed to a considerable extent by means of an MTI filter on the basis of a different doppler frequency of target signals and clutter signals.

Similarly, $u_a$ can be expressed as:

$$u_a = j_a \, s(t) \cos(\omega t + \beta) + C_a \, c(t) \cos(\omega t + \alpha) + N_a(t) \qquad (4)$$

3

The constant factors $j_a$ and $c_a$ in the time-dependent amplitudes of the interference and clutter signals are determined by the antenna sensitivity of auxiliary antenna 4 and the receiver 5 connected to this antenna. As a result of delay time differences and different channel properties, the phase shifts are different from those in (3).

Subsequently, we define (3) as the in-phase component $u_{m,I}$ of $u_m$ and (4) as the in-phase component $u_{a,I}$ of $u_a$. The quadrature components $u_{m,Q}$ and $u_{a,Q}$ are identical to (3) and (4) with the understanding that the cosine function is replaced by a sine function.

Weighting factors $W_I$ and $W_Q$ are obtained by correlation of $u_r$ with $u_{a,I}$ and $u_{a,Q}$:

$$W_I = u_r \times u_{a,I} \qquad (5)$$

$$W_Q = u_r \times u_{a,Q}, \qquad (6)$$

where the $\times$-sign symbolises the correlation function. When working out (5) and (6), we assume that the clutter signal, the interference signal and the noise signal are not mutually correlated:

$$s(t) \times c(t) = s(t) \times N(t) = c(t) \times N(t) = 0 \qquad (7)$$

After correlation, the signals are averaged over a certain amount of time (indicated by an averaging line) and amplified with a factor G in correlation unit 9 and 10. Assuming that the phase differences between the main channel and auxiliary channel are the same ($\gamma - \beta = \theta - \alpha$), from (1) to (7) follows:

$$u_r = j_m \, s(t) \cos(\omega t + \gamma) - \qquad (8a)$$

$$\frac{G}{N} j_m \, s(t) \, j_a^2 \, \overline{s^2(t)} \cos(\omega t + \gamma) + \qquad (8b)$$

$$\frac{G}{N} j_a \, s(t) \, C_m \, C_a \, \overline{c^2(t)} \cos(\omega t + \gamma) + \qquad (8c)$$

$$C_m \, c(t) \cos(\omega t + \theta) - \qquad (8d)$$

$$\frac{G}{N} C_m \, c(t) \, C_a^2 \, \overline{c^2(t)} \cos(\omega t + \theta) + \qquad (8e)$$

$$\frac{G}{N} C_a \, c(t) \, j_m \, j_a \, \overline{s^2(t)} \cos(\omega t + \theta) + \qquad (8f)$$

$$N_m(t) - W_I . N_{a,I}(t) - W_Q . N_{a,Q}(t) \qquad (8g)$$

$$\text{with } N = 1 + G \, [ \, j_a^2 \, \overline{s^2(t)} + C_a^2 \, \overline{c^2(t)} + \overline{N_a^2(t)} \, ] \qquad (8h)$$

The term (8a) gives the original interference signal in the main channel. The term (8b) gives the signal with which the original interference signal is suppressed. This term is determined by means of the received common interference in the auxiliary channel, where $j_a \, \overline{s^2(t)}$ is the interference power in the auxiliary channel. Term (8c) contains the clutter power $C_m \, C_a \, \overline{c^2(t)}$ resulting from correlation of clutter in the main and auxiliary channels.

This term shows that an extra suppression signal from the auxiliary channel is injected into the main channel as a result of the presence of common clutter signals in both channels. This term can become very high in case of strong clutter and very strong interference signals. The remaining terms (8d) (8e) and (8f) give the clutter signals with phases different from the first terms (and in principle of a different frequency $\omega$). Terms (8e) and (8f) show that extra clutter is injected from the auxiliary channel into the main channel. Term (8g) represents the noise with $N_{a,I}$ and $N_{a,Q}$, the in-phase and quadrature components respectively of $N_a$. Term (8c) now proves to be responsible for the degradation of clutter suppression, while terms (8e) and (8f) prove to be responsible for the lower detection probability. This will forthwith be explained in further detail.

The degree to which the interference signal in the main channel is suppressed can be represented by a so-called suppression factor OF:

$$OF = -20 \log \left| \frac{u'_{m,j}}{u_{m,j}} \right| \qquad (9)$$

with $u_{m,j}$ the original interference signal in the main channel identical to (8a) and $u'_{m,j}$ the residual interference (identical to (8a) - (8b) - (8c)).

This results in:

$$OF = -20 \log \left| 1 - \frac{G \, [ \, j_a^2 \, \overline{s^2(t)} + \dfrac{j_a}{j_m} . \dfrac{C_a}{C_m} . C_m^2 . \overline{c^2(t)} \, ]}{1 + G \, [ \, j_a^2 \, \overline{s^2(t)} + (\dfrac{C_a}{C_m})^2 . C_m^2 \, \overline{c^2(t)} + \overline{N_a^2(t)} \, ]} \right| \qquad (10)$$

In the absence of clutter ($C_m{}^2$ $\overline{c^2(t)}$ = 0) the suppression factor OF will in practice have a finite value of e.g. 15 dB with an interference power ($j_a{}^2$ $\overline{s^2(t)}$ ) of 10 dB. The correction signal (8b) is therefore insufficient to fully compensate for interference signal (8a).

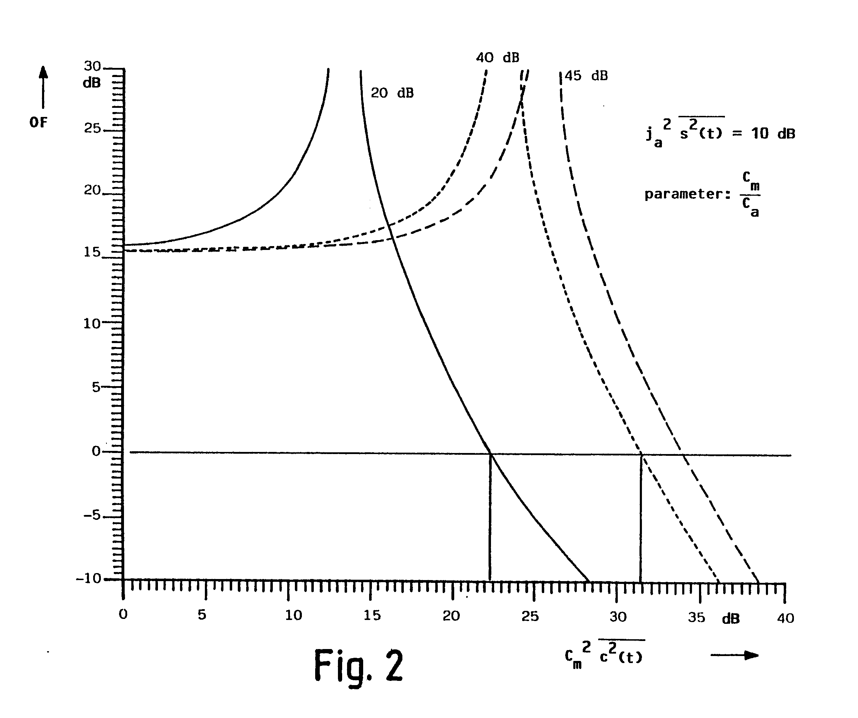

In Fig. 2, the suppression factor OF is presented as a function of the clutter power $C_m$ $\overline{c^2(t)}$ in the main channel with as parameter the amplification ratio $C_m$ and $C_a$ of clutter in the main channel and the auxiliary channel respectively.

With the clutter power increasing from the value zero, the suppression factor initially even increases: the injected clutter signal (8c) supplements the correction signal (8b). When a particular value of the clutter power is exceeded, the injected clutter signal (8c) starts to dominate, resulting in interference signal (8a) no longer being suppressed: the suppression factor decreases. In case of high clutter powers, it is even possible for an interference signal amplification to occur: the suppression factor will even become negative. In practice it may be stated that the side-lobe suppression of interference signals no longer functions when the suppression factor is negative. The effect of a decreased sensitivity of the auxiliary antenna will now become clear from parameter

$$\frac{C_m}{C_a}$$

in Fig. 2. When

$$\frac{C_m}{C_a}$$

is 20 dB, the side-lobe suppression no longer functions with a clutter power higher than approx. 22.5 dB. In case of increasing values of

$$\frac{C_a}{C_m},$$

the side-lobe suppression proves to function with increasingly high clutter powers. Only when

$$\frac{C_m}{C_a}$$

is 40 dB, the suppression factor becomes negative with a clutter power of approx. 31.5 dB. The result is therefore that

$$\frac{C_m}{C_a}$$

should be increased without changing

$$\frac{j_m}{j_a}.$$

As stated before, these ratios are determined by the sensitivity of the antennas.

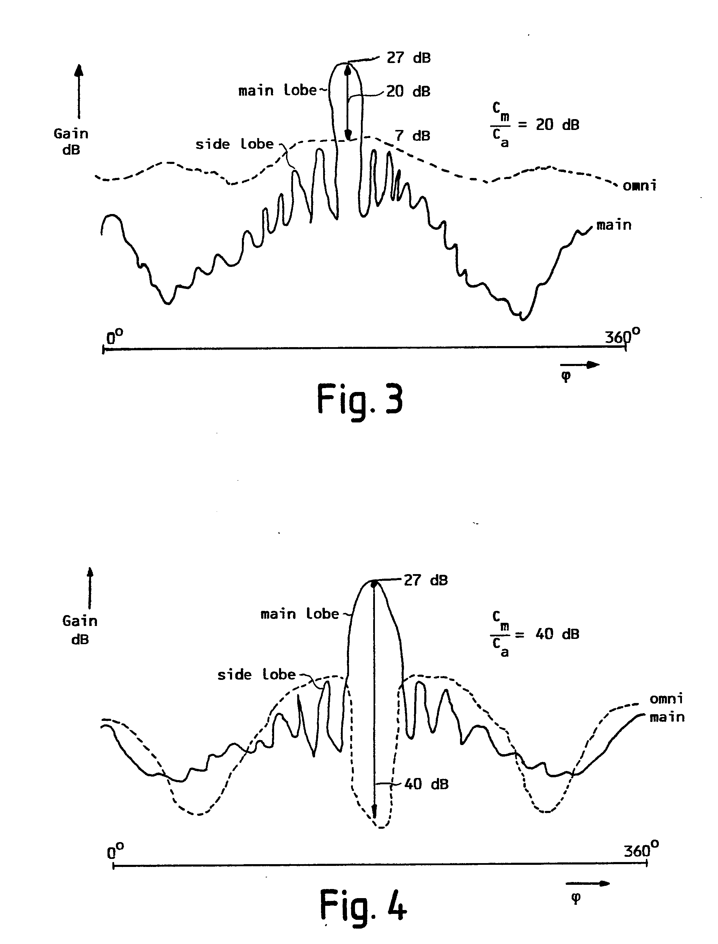

Fig. 3 shows an antenna diagram of a conventional, omni-directional auxiliary antenna suitable for application in a side-lobe suppression system. In this diagram the antenna sensitivity (gain) is represented as a function of the direction ($\phi$). In the direction of the side lobes of the main antenna, the auxiliary antenna has a higher sensitivity than the main antenna. The value of

$$\frac{j_m}{j_a}$$

is determined by this ratio. At the main lobe of the main antenna, the difference in antenna gain between main antenna and auxiliary antenna is approx. 20 dB. This contributes to the determination of

$$\frac{c_m}{c_a}.$$

Fig. 4 represents an antenna diagram of the auxiliary antenna according to the invention. In the direction ($\phi$) of the main lobe of the main antenna, the auxiliary antenna shows a minimum sensitivity (dip). This does not affect the value of

$$\frac{j_m}{j_a}$$

contrary to the value of

$$\frac{c_m}{c_a}$$

which is now considerably lower.

A typical value of the difference in gain between main antenna and auxiliary antenna at the main lobe is for instance 40 dB. With such a dip in the auxiliary antenna sensitivity it is achieved that the side-lobe suppression at higher clutter powers continues to function as illustrated on the basis of Fig. 2.

Such a dip in the sensitivity also has a favourable effect on the detection capacity of the main antenna. Because the side-lobe suppression circuit also attemps to suppress the received clutter signals, a clutter signal (8e) with varying phase is added to a target signal in the main channel. As a result, the clutter returns obtain apparently higher and non-constant doppler frequencies. After all, the doppler frequency $\omega_d$ is given by:

$$\omega_d = \frac{d\varphi}{dt} = \frac{4\pi}{\lambda} \cdot \frac{dR}{dt} = \frac{4\pi \, V_r}{\lambda},$$

where $\phi$ is the phase shift between the transmitted wave and the reflected wave, $\lambda$ is the wavelength of the radar waves, R is the range of the reflection area, and $V_r$ is the velocity with respect to the radar. A clutter signal with varying phase therefore gives rise to an apparent doppler component, as a result of which the clutter contribution by the MTI unit can be distinguished to a lesser degree from moving-target returns. This results in a lower effectiveness of an MTI-filter incorporated in the main channel.

## Claims

1. Radar apparatus provided with:
- a main directional antenna,
- a first coherent receiver connected to the directional antenna for obtaining first receiving signals;
- an MTI unit connected to said receiver;

6

- a coherent side-lobe suppression unit provided with:
- an auxiliary antenna;
- a second receiver connected to the auxiliary antenna for obtaining second receiving signals;
- a signal weighting and combination unit connected to the second receiver, which unit, supplied with the first and second signals, generates an output signal to be supplied to the MTI unit and comprising such a combination of the first and second receiving signals that interference signals received via the side lobes of the main directional antenna and present in the first signals are suppressed in the output signal, characterised in that the auxiliary antenna has a minimum in sensitivity at least in the direction coinciding with a direction in which the main directional antenna has a maximum in sensitivity to achieve an attenuation of the signals received by the auxiliary antenna in this direction, while maintaining phase correlation.

2. Radar apparatus as claimed in claim 1, characterised in that the auxiliary antenna is rigidly connected to the main antenna.

3. Side-lobe suppression unit suitable for application in a radar apparatus as claimed in one of the above claims.

Fig.1

$$\overline{j_a^2 \, s^2(t)} = 10 \text{ dB}$$

parameter: $\dfrac{c_m}{c_a}$

45 dB

40 dB

20 dB

$\overline{c_m^2 \, c^2(t)}$

dB

OF

dB

## Fig. 2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | EP-A-0 076 536 (HSA)<br>* Abstract; figure 1 * | 1-3 | G 01 S 7/28 |
| Y | PATENT ABSTRACTS OF JAPAN, vol. 3, no. 64 (E-114), 31st May 1979; JP-A-54 42 962 (TOKYO SHIBAURA) 04-05-1979 | 1-3 | |
| A | INSTITUTION OF ELECTRONIC AND RADIO ENGINEERS-PROCEEDINGS OF THE SYMPOSIUM ON SIGNAL PROCESSING IN RADAR AND SONAR DIRECTIONAL SYSTEMS, London, GB, 6th-9th July 1964, pages 247-260; J. CRONEY et al.: "A Side-lobe suppression system for primary radar"<br>* Pages 247-249, paragraph 2; pages 253-255, paragraph 4.2; figure 2 * | 1-3 | |
| A,D | US-A-3 916 408 (N.T. EVANS et al.)<br>* Column 2, line 57 - column 6, line 21; figures 1-5 * | 1-3 | |
| A | US-A-4 516 126 (R.J. MASAK et al.)<br>* Column 1, lines 4-55; figure 1 * | 1-3 | TECHNICAL FIELDS SEARCHED (Int. Cl.5)<br><br>G 01 S<br>H 01 Q |
| A | US-A-3 369 235 (C.E. ODAMS et al.)<br>* Column 5, line 58 - column 6, line 66; figure 2 * | 1-3 | |
| A | DE-B-1 058 579 (DECCA)<br>* Column 3, line 5 - column 6, line 53; figures 4,6 * | 1-3 | |
| A | EP-A-0 061 403 (THOMSON-CSF)<br>* Page 6, line 20 - page 7, line 21; figures 5,6 * | 1-3 | |

The present search report has been drawn up for all claims

| Place of search | Date of completion of the search | Examiner |
|---|---|---|
| THE HAGUE | 23-02-1990 | VAN WEEL E.J.G. |